# EUROPÄISCHE PATENTSCHRIFT

(11) **EP 3 329 188 B1**
(45) Veröffentlichungstag und Bekanntmachung des Hinweises auf die Patenterteilung: **17.01.2024**
(21) Anmeldenummer: 16788413.9
(22) Anmeldetag: 20.09.2016
(51) Int. Cl.: F04B 1/0404, F04B 17/03, H02K 11/33, F04D 25/08, F04D 27/00, F24F 110/30, F24F 110/40

(54) **VENTILATOR**
VENTILATOR
VENTILATEUR

(30) Priorität: 02.10.2015 DE 102015219150
(43) Veröffentlichungstag der Anmeldung: 06.06.2018
(73) Patentinhaber: Ziehl-Abegg SE, 74653 Künzelsau (DE)
(72) Erfinder: HOFMANN, Sven, 74653 Gaisbach (DE); KOLLMAR, Ruben, 74639 Zweiflingen (DE)
(74) Vertreter: Ullrich & Naumann PartG mbB
(86) Internationale Anmeldenummer: PCT/DE2016/200439
(87) Internationale Veröffentlichungsnummer: WO 2017/054814

(56) Entgegenhaltungen:
- WO-A1-02/47947
- DE-A1- 10 345 735
- DE-A1-102009 011 007
- DE-A1-102012 020 460
- GB-A- 2 328 737
- GB-A- 2 457 534
- US-A1- 2003 198 564
- US-A1- 2009 079 281
- US-A1- 2009 134 823
- US-A1- 2012 053 738
- US-A1- 2015 050 876

## Beschreibung

Die Erfindung betrifft einen Ventilator mit einem Motor.

Motoren bzw. Ventilatoren der gattungsbildenden Art sind hinlänglich aus der Praxis bekannt. Lediglich beispielhaft sei dazu auf GB 2 512 043 A verwiesen. Aus dieser Druckschrift ist ein Lüftungssystem mit entsprechenden Ventilatoren bekannt, bei dem im Gehäuse eine Luftmengenmessung stattfindet. Die diesbezügliche Elektronik befindet sich im Gehäuse, jedoch außerhalb des Motors, und wird auch von außerhalb des Motors mit Strom/Spannung versorgt. Eine integrierte Regelung ist nicht vorgesehen. In Bezug auf die Datenübertragung von Soll- und Istwerten ist das bekannte System aufwändig, da kein Busanschluss vorgesehen ist. Das Dokument US 2003/198564 A1 offenbart einen Ventilator mit einem Motor und eine Sensoreinheit mit einem Drucksensor,

In modernen Klimakastengeräten kommen heutzutage drehzahlgeregelte Ventilatoren mit elektronisch kommutierten Motoren (EC-Ventilatoren) zum Einsatz. Sie dienen dort als Zuluft-/Abluftventilator. Zur bedarfsgerechten Regelung der Luftmenge ist es erforderlich, an verschiedenen Stellen im Klimakastengerät den Luftdruck und ggf. die Temperatur zu messen. Regelmäßig werden Druck- bzw. Differenzdrucksensoren verwendet. Das Ausgangssignal des Differenzdrucksensors wird meist an eine separate Regeleinheit geführt und dort verarbeitet. Die Regeleinheit berechnet einen Drehzahlsollwert und gibt diesen, beispielsweise über ein analoges Signal (beispielsweise 0 bis 10 Volt) oder über ein Bussystem (beispielsweise über einen Modbus) an eine übergeordnete Steuerung/Regelung oder an den Ventilator. Drucksensor, Regeleinheit, Spannungsversorgung und Ventilator müssen im bzw. am Klimagerät montiert und untereinander verdrahtet werden. Dies ist aufwändig.

Der Erfindung liegt die Aufgabe zugrunde, einen Motor der gattungsbildenden Art derart auszugestalten und weiterzubilden, dass er sich zum Antrieb von Ventilatoren eignet, mit möglichst geringem schaltungstechnischem und steuerungs- bzw. regelungstechnischem Aufwand.

Voranstehende Aufgabe ist mit den Merkmalen des Anspruchs 1 gelöst, nämlich dadurch, dass die Sensoreinheit als auf die Motorelektronik aufsteckbares oder in die Motorelektronik einsteckbares Modul ausgeführt oder zumindest teilweise in die Motorelektronik integriert ist und über die Motorelektronik, d.h. intern, mit Energie versorgt wird.

Ein erfindungsgemäßes Ventilatorsystem umfasst mindestens einen erfindungsgemäßen Ventilator, nämlich gemäß dem weiter nebengeordneten Anspruch 10.

Für den erfindungsgemäßen Ventilator ist wesentlich, dass die Sensoreinheit, umfassend den Sensor und die erforderliche Elektronik des Sensors, entweder als Modul auf die Motorelektronik einsteckbar bzw. in die Motorelektronik einsteckbar ist. Alternativ ist die Sensoreinheit komplett in die Motorelektronik integriert. In beiden Fällen wird die Sensoreinheit über die Motorelektronik mit elektrischer Energie versorgt und ist die Sensoreinheit unmittelbar mit der Motorelektronik wirkverbunden.

Im Rahmen der erstgenannten Variante, d.h. im Rahmen der Ausgestaltung der Sensoreinheit als einsteckbares oder aufsteckbares Modul, lassen sich entsprechende Ventilatoren nachrüsten. Dazu kommen alle bekannten Motortechnologien in Frage, beispielsweise Asynchronmotoren, permanentmagneterregte Synchronmotoren, Synchron-Reluktanzmotoren, etc.

Nachfolgend wird die Erfindung am Beispiel eines Radialventilators beschrieben, wobei die Beschreibung der beispielhaften Erörterung der erfindungsgemäßen Lehre dient, diese jedoch nicht auf einen Ventilatortyp einschränkt. Auch andere Ventilatorbauarten wie beispielsweise Axialventilatoren/Diagonalventilatoren kommen in Frage.

Wie bereits zuvor ausgeführt, ist der Begriff "Sensoreinheit" im weitesten Sinne zu verstehen. Er umfasst den eigentlichen Sensor und beispielsweise eine Leiterplatte mit elektronischen Bauteilen.

Die Sensoreinheit fasst einen Drucksensor auf, der über mindestens einen Schlauch einen lokalen Druck oder über zwei Schläuche eine Druckdifferenz des Drucks an zwei Orten ermittelt. Ein dem Druck oder der Druckdifferenz entsprechendes analoges oder digitales Signal wird einem Mikroprozessor zugeführt, der integraler Bestandteil der Sensoreinheit sein kann.

Des Weiteren ist es denkbar, dass die Sensoreinheit weitere Sensoren umfasst, die an die Sensoreinheit angeschlossen sind und deren Messwerte einlesbar sind. Auch ist es denkbar, dass weitere interne oder externe Sensoreinheiten vorgesehen sind, die mit entsprechenden Sensoren ausgestattet sind.

Wesentlich ist jedenfalls, dass der Schlauch (Druckschlauch) bzw. die Schläuche (bei Differenzdruck) direkt am Motor/Ventilator angeschlossen sind. Die integrierte Sensoreinheit erfasst den Druck und gibt einen diesem Druck entsprechenden Messwert über ein analoges oder digitales Signal an ein Mikroprozessorsystem weiter. Optional können weitere Messgrößen über externe Sensoren ermittelt werden und deren Messwerte der Sensoreinheit vermittelt und eingelesen werden. Dazu können beispielsweise Temperatursensoren, Luftfeucht-Sensoren, Sensoren betreffend die Luftqualität, etc. vorgesehen sein.

In vorteilhafter Weise kommuniziert die Sensoreinheit direkt mit einer Motor Controller Einheit per Bussystem. Bei Vorkehrung mehrerer Motoren/Ventilatoren ist es von Vorteil, wenn eine externe, übergeordnete Regelung vorgesehen ist, die vorzugsweise über ein Bussystem, beispielsweise über einen Modbus, jeweils einen Sollwert vorgibt. Die übergeordnete Regelung ist u.a. zum Datenaustausch mit der integrierten Motorsteuerung und der Sensoreinheit vorgesehen. Auch ist es denkbar, dass die zum Datenaustausch dienende Schnittstelle ein Verfahren zur dynamischen Adressierung von Slave-Einheiten nutzt, beispielsweise gemäß EP 2 287 689 B1. Ein gemeinsames Kommunikationsprotokoll mit einheitlichem Protokollsatz ist dabei von ganz besonderem Vorteil.

Das Verfahren nutzt einen Regelalgorithmus eines Mikroprozessorsystems, und zwar unter Berücksichtigung eines vorgebbaren Druck-Sollwerts und ggf. unter Berücksichtigung weiterer Sollwerte für zusätzliche Sensoren. Es wird ein Drehzahl-Sollwert des jeweiligen Motors berechnet und die integrierte Motorelektronik wird entsprechend angesteuert, derart, dass sich eine bestimmte Drehzahl des Motors ergibt.

Entsprechend den voranstehenden Ausführungen kann die adressierbare Einheit eine Druckmessung, Druckregelung und unter Verwendung des ventilatorabhängigen K-Faktors eine Volumenstrommessung oder Volumenstromregelung übernehmen.

Vorteile der erfindungsgemäßen Technik sind darin zu sehen, dass die Sensoreinheit direkt im Motor bzw. Ventilator mit Spannung/Strom versorgt wird. Entsprechend entfällt eine aufwändige Montage und Verdrahtung des Sensors im Klimakastengerät.

Schläuche zur Druckerfassung werden direkt an den Ventilator bzw. an dort vorgesehene Druckstutzen angeschlossen, die mit der Sensoreinheit strömungsverbunden sind.

Bei Bedarf kann der Ventilator die Druckmessung, Druckregelung oder auch die Volumenstrommessung bzw. Volumenstromregelung übernehmen. Eine externe Regeleinheit und deren Verdrahtung können im Rahmen einer solchen Ausführung entfallen.

Externe Stromversorgungen des Drucksensors sind nicht erforderlich, nämlich aufgrund der internen Stromversorgung. Außerdem wird nur eine Modbusadresse und ein gemeinsames Busbeschreibungsprotokoll benötigt, da der Drucksensor und Motor bzw. Ventilator als eine Einheit in ein ggf. externes Steuersystem eingebunden sind.

Die Sensoreinheit lässt sich hochintegriert, beispielsweise auf Chip-Basis, in der Motorelektronik verbauen und an das Mikrocontrollersystem des Motors anschließen.

Ein erfindungsgemäßes Ventilatorsystem, insbesondere ein Klimakastengerät, nutzt mindestens einen erfindungsgemäßen Ventilator entsprechend den voranstehenden Ausführungen. Gleichzeitig kann ein zum Stand der Technik gehörender Motor/Ventilator mit erfindungsgemäßen Ventilatoren kombiniert sein.

Es gibt nun verschiedene Möglichkeiten, die Lehre der vorliegenden Erfindung in vorteilhafter Weise auszugestalten und weiterzubilden. Dazu ist einerseits auf dem Anspruch 1 nachgeordneten Ansprüche und andererseits auf die nachfolgende Erläuterung eines bevorzugten Ausführungsbeispiel der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1a: in einer schematischen Ansicht ein Ausführungsbeispiel eines erfindungsgemäßen Radialventilators (mit erfindungsgemäßem Motor als Antrieb), wobei dort eine integrierte Differenzdruckmessung vorgesehen ist,
- Fig. 1b: in einer schematischen Ansicht, vergrößert, den Gegenstand aus Fig. 1a,
- Fig. 2: in einer schematischen Ansicht den Gegenstand aus Fig. 1a, gegenüber Fig. 1a verkippt,
- Fig. 3a: in einer schematischen Ansicht den Gegenstand aus Fig. 2 , jedoch mit geöffnetem Deckel, der die in die Motorelektronik modular eingesteckte Sensoreinheit erkennen lässt,
- Fig. 3b: in einer schematischen Ansicht, vergrößert, die Motorelektronik des Gegenstands aus Fig. 3a,
- Fig. 4: in einer schematischen Ansicht eine Druckdurchführung zum Anschluss zweier externer Druckschläuche und zur Verbindung der Durchführung mit der modularen Sensoreinheit,
- Fig. 5a: in einer schematischen Draufsicht die Sensoreinheit zum Einstecken in die Motorelektronik mit internen Druckschläuchen, und
- Fig. 5b: in einer schematischen Unteransicht den Gegenstand aus Fig. 5a.

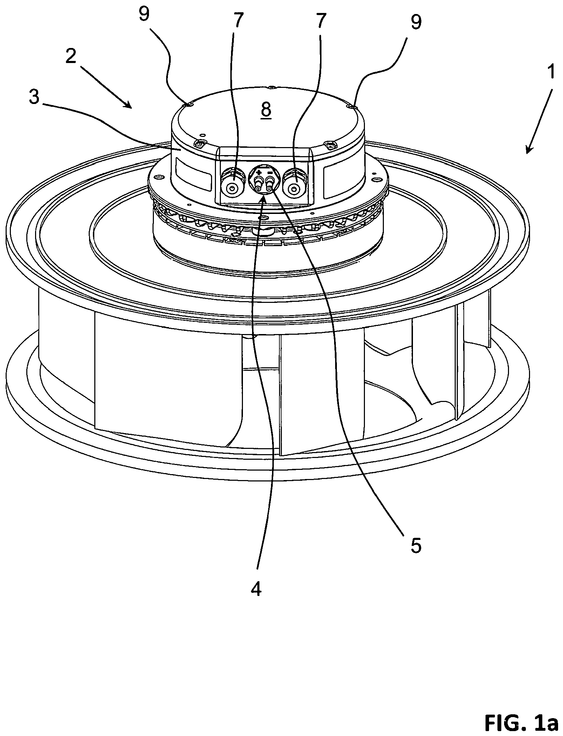

Fig. 1a zeigt ein Anwendungsbeispiel der erfindungsgemäßen Lehre, nämlich einen Radialventilator 1 mit integrierter Differenzdruckmessung. Der die integrierte Differenzdruckmessung umfassende Motor 2 kann grundsätzlich als Antrieb unterschiedlicher Ventilatoren dienen.

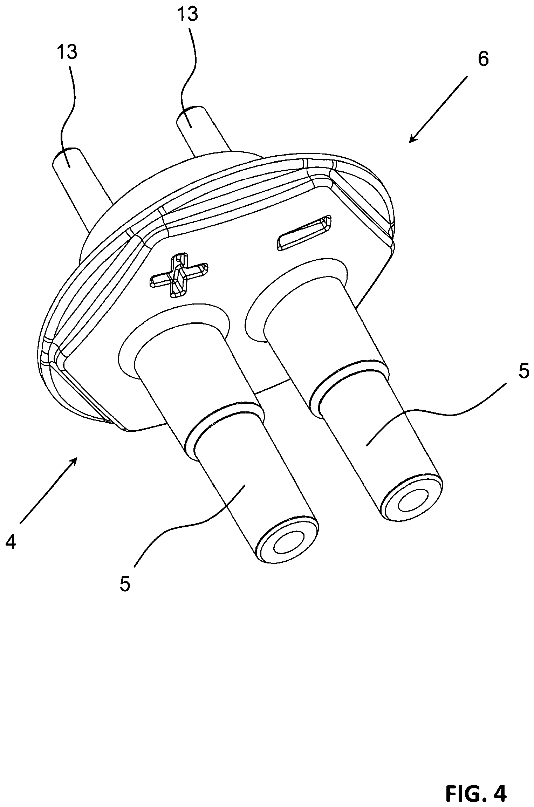

Fig. 1a zeigt deutlich ein Gehäuse 3 für die Motorelektronik, wobei im Gehäuse 3 ein Druckanschluss 4 mit zwei Stutzen 5 für externe Druckschläuche zur Differenzdruckmessung vorgesehen sind. Der Druckanschluss 4 ist Bestandteil eines in Fig. 4 gezeigten Durchgangs 6, der in das Gehäuse 3 verschraubt ist. Ebenso sind elektrische Anschlüsse 7 vorgesehen.

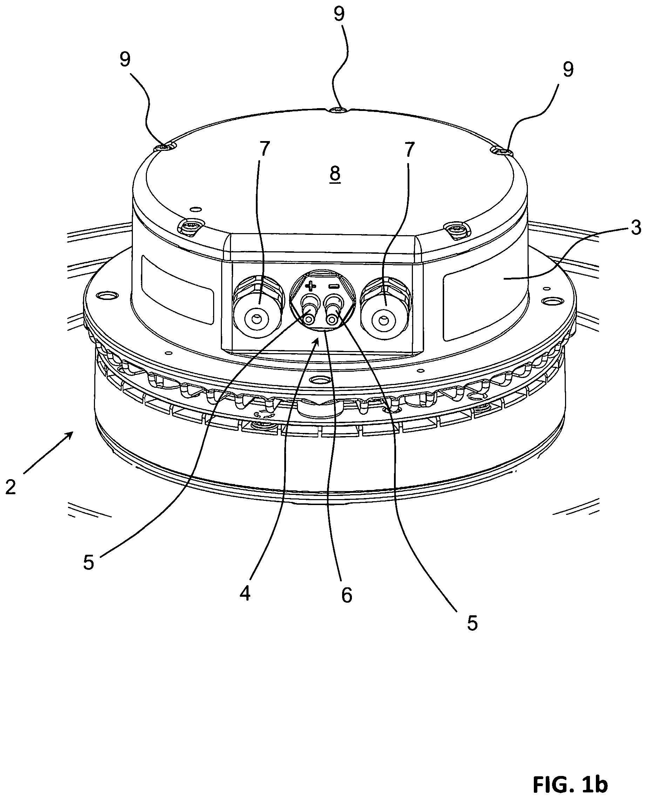

Fig. 1b zeigt das Gehäuse 3 des Radialventilators 1 aus Fig. 1a in vergrößerter Darstellung. Fig. 1b zeigt deutlich den Druckanschluss 4 mit den beiden Stutzen 5.

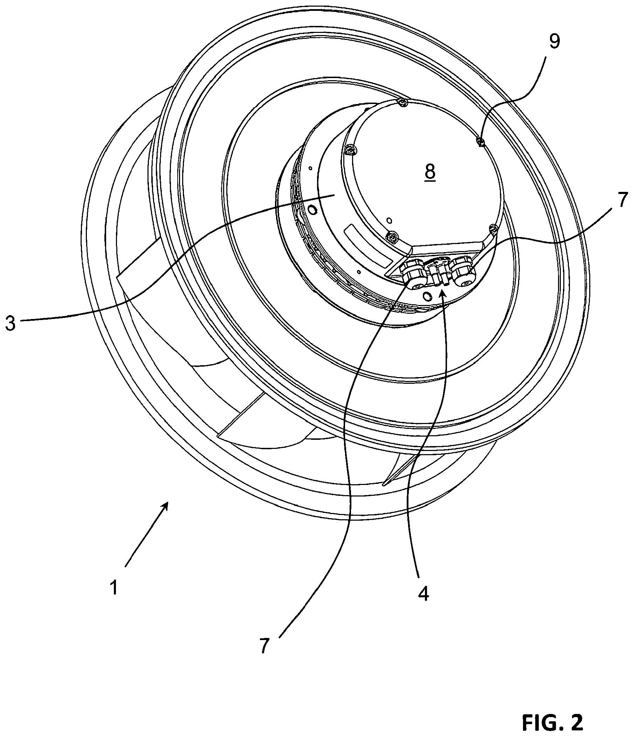

Fig. 2 zeigt den Radialventilator aus Fig. 1 in gekippter Darstellung, mit den zuvor erörterten Bauteilen. Das Gehäuse 3 hat einen Deckel 8, der mittels Schrauben 9 am Gehäuse 3 befestigt ist.

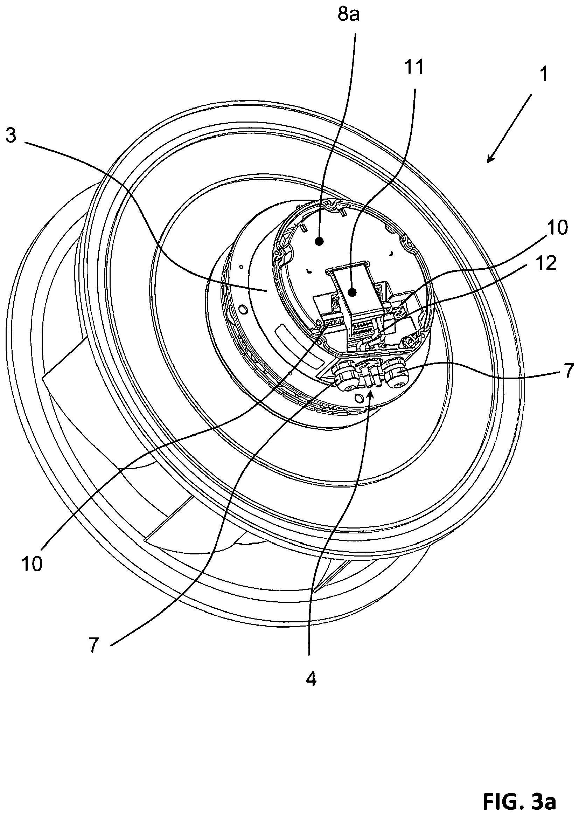

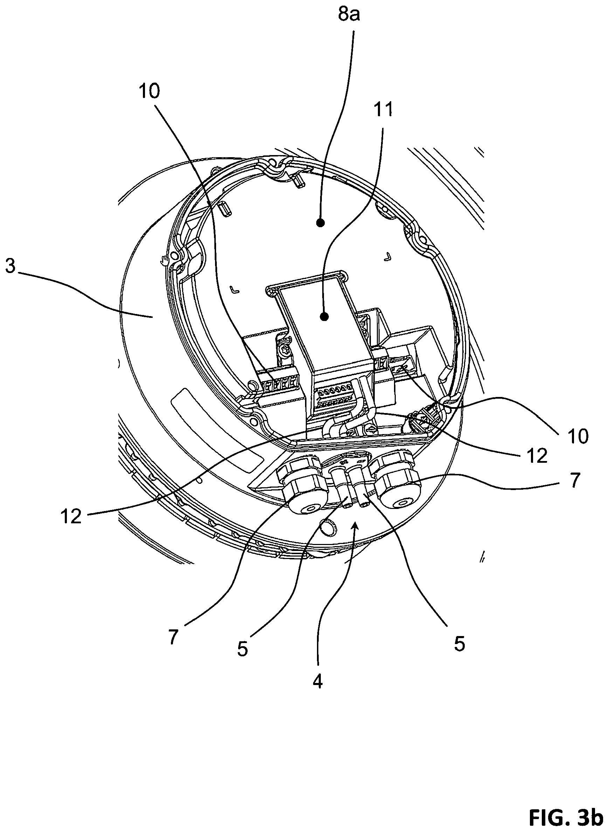

Die Fig. 3a und 3b zeigen den Radialventilator 1 entsprechend der Darstellung aus Fig. 2, jedoch mit geöffnetem Gehäuse 3. Der in den Fig. 3a und 3b nicht gezeigte Deckel 8 ist nach Lösen der Schrauben 9 entfernt worden.

Gemäß Fig. 3b ist die im Gehäuse 3 befindliche Motorelektronik angedeutet, wobei dort lediglich die Anschlussklemmen 10, als Bestandteil der Motorelektronik, zu erkennen sind. Die eigentliche Motorelektronik ist durch einen inneren Deckel 8a abgedeckt, der als Berührschutz dient.

In die Motorelektronik, im Bereich einer Ausnehmung des inneren Deckels 8a, ist die modulare Sensoreinheit 11 eingesetzt bzw. in/auf der Leiterplatte der Motorelektronik eingesteckt und dort kontaktiert. Die beiden internen Schläuche 12 sind erkennbar. Sie erstrecken sich von der modularen Sensoreinheit 11 zum Durchgang 6 und können von außerhalb des Gehäuses 3 über die Stutzen 5 mit nicht gezeigten externen Schläuchen strömungsverbunden werden. Es lassen sich Drücke aus beliebigen Stellen/Orten in die Sensoreinheit 11 kommunizieren, nämlich durch eine so geschaffene Strömungsverbindung.

Fig. 4 zeigt in einer schematischen Ansicht den Durchgang 6 mit internen Stutzen 13, von denen aus relativ dünne Schläuche zur Sensoreinheit 11 führen (vgl. Fig. 3b). Die äußeren Stutzen 5 dienen zum Anschluss externer Druckschläuche entsprechend den voranstehenden Ausführungen.

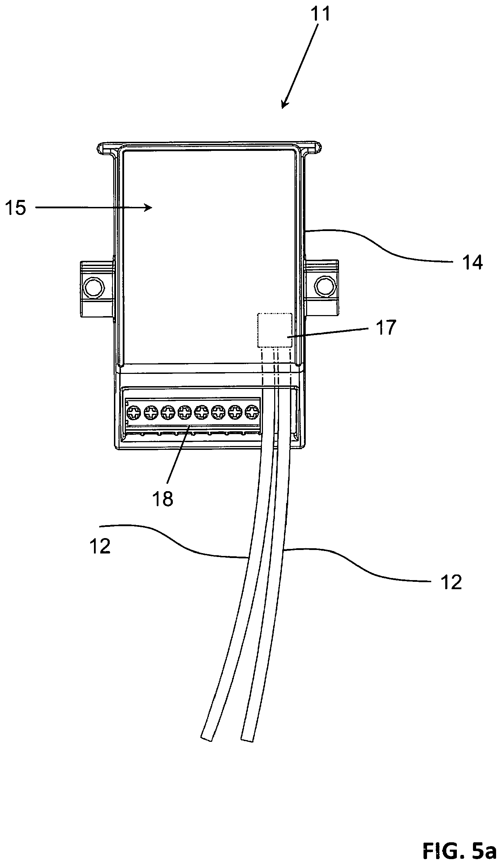

Fig. 5a zeigt in einer Draufsicht die Sensoreinheit 11, die in einem vorzugsweise aus Kunststoff gefertigten Gehäuse untergebracht ist. Auf einer Leiterplatte 15 sitzen neben weiteren elektronischen Bausteinen der eigentliche Drucksensor (17), der mit den internen Schläuchen 12 strömungsverbunden ist.

Des Weiteren sind Anschlussklemmen (18) zur (Modbus-) Kommunikation nach außen vorgesehen.

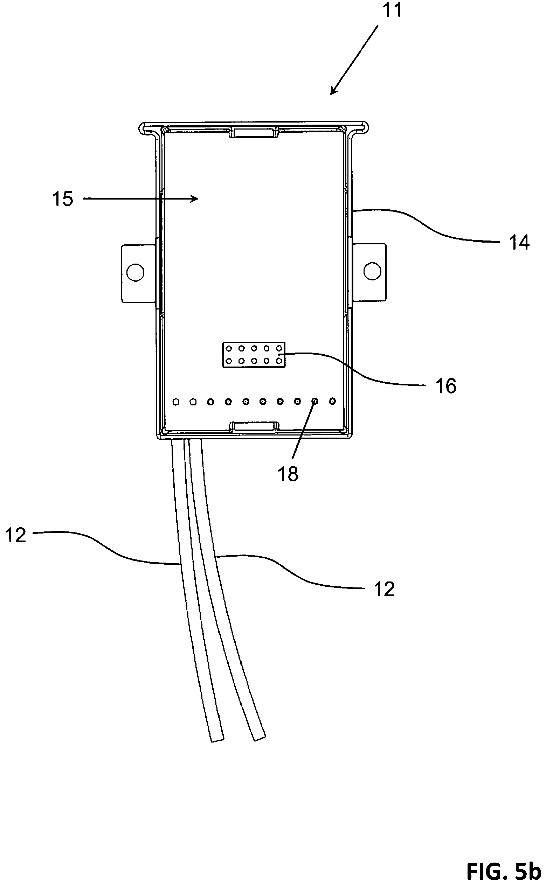

Fig. 5b zeigt die modulare Sensoreinheit 11 von unten, nämlich in einer Unteransicht die dort vorgesehenen Leiterplatte 15, die mit einer Kontaktierung 16 zur Spannungsversorgung direkt von der Hauptleiterplatte der Motorelektronik und zum internen Kommunikationsanschluss zum Prozessor, etc. vorgesehen ist.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass das voranstehend beschriebene Ausführungsbeispiel der erfindungsgemäßen Lehre lediglich zur Erörterung der beanspruchten Lehre dient, diese jedoch nicht auf das Ausführungsbeispiel einschränkt, da die Erfindung in den Ansprüchen definiert ist.

### Bezugszeichenliste

- 1: Radialventilator
- 2: Motor
- 3: Gehäuse (für die Motorelektronik)
- 4: Druckanschluss
- 5: Stutzen (außen)
- 6: Durchgang (in der Gehäusewandung)
- 7: elektrischer Anschluss
- 8: äußerer Deckel
- 8a: innerer Deckel (Schutzabdeckung)
- 9: Schraube
- 10: Anschlussklemmen (Bestandteil der Motorelektronik)
- 11: Sensoreinheit
- 12: Schlauch (intern)
- 13: Stutzen (intern)
- 14: Kunststoffgehäuse (der Sensoreinheit)
- 15: Leiterplatte (der Sensoreinheit)
- 16: Kontaktierung
- 17: Sensor, Drucksensor
- 18: Anschlussklemmen (Sensoreinheit)

## Patentansprüche

1. Ventilator mit einem Motor, insbesondere mit einem elektronisch kommutierten Motor, beispielsweise einem EC-Motor, wobei der Motor eine integrierte Motorelektronik und mindestens eine Sensoreinheit (11) zur unmittelbaren oder mittelbaren Druck-/Volumenstromregelung umfasst, wobei die Regelung intern oder extern erfolgen kann, wobei die Sensoreinheit (11) als auf die Motorelektronik aufsteckbares oder in die Motorelektronik einsteckbares Modul ausgeführt oder zumindest teilweise in die Motorelektronik integriert ist und über die Motorelektronik, d.h. intern, mit Energie versorgt wird,
wobei die Sensoreinheit (11) modular ausgebildet ist, in/auf einer Leiterplatte der Motorelektronik eingesteckt und dort kontaktiert ist und einen Drucksensor (17) umfasst, durch den über eine Strömungsverbindung, nämlich über mindestens einen internen Schlauch (12) innerhalb des Gehäuses (3) und mindestens einen externen Schlauch außerhalb des Gehäuses (3) ein lokaler Druck oder über zwei interne Schläuche (12) innerhalb des Gehäuses (3), die sich von der modularen Sensoreinheit (11) zu einem Durchgang (6) erstrecken und über einen zum Durchgang (6) gehörenden Druckanschluss (4) mit zwei Stutzen (5) für zwei externe Druckschläuche außerhalb des Gehäuses (3) strömungsverbunden sind, eine Druckdifferenz des Drucks an zwei Orten ermittelbar ist und ein dem Druck oder der Druckdifferenz entsprechendes analoges oder digitales Signal einer Verarbeitungseinheit, beispielsweise einem Mikroprozessor, zuführbar ist.

2. Ventilator nach Anspruch 1, **dadurch gekennzeichnet, dass** die Sensoreinheit (11) weitere elektronische Bausteine umfasst, beispielsweise eine Leiterplatte mit elektronischen Bauteilen.

3. Ventilator nach einem der Ansprüche 1 bis 2, **dadurch gekennzeichnet, dass** die Sensoreinheit (11) weitere Sensoren umfasst, die an den Rest der Sensoreinheit (11) angeschlossen sind und deren Messwerte einlesbar sind und/oder dass weitere interne oder externe Sensoreinheiten vorgesehen sind.

4. Ventilator nach Anspruch 3, **dadurch gekennzeichnet, dass** die weiteren Sensoren dazu ausgelegt sind, Messwerte betreffend die Temperatur, die Luftfeuchte und/oder die Luftqualität zu liefern.

5. Ventilator nach einem der Ansprüche 1 bis 4, **dadurch gekennzeichnet, dass** die Sensoreinheit (11) dazu ausgelegt ist, direkt mit einer Motor Controller Einheit analog oder digital, beispielsweise per Bussystem, zu kommunizieren.

6. Ventilator nach einem der Ansprüche 1 bis 5, **dadurch gekennzeichnet, dass** eine externe, übergeordnete Regelung vorgesehen ist, die vorzugsweise über ein Bus-System, beispielsweise über einen Modbus, jeweils einen Sollwert vorgibt.

7. Ventilator nach Anspruch 6, **dadurch gekennzeichnet, dass** die übergeordnete Regelung u.a. zum Datenaustauch mit einer integrierten Motorsteuerung und der Sensoreinheit (11) vorgesehen ist.

8. Ventilator nach Anspruch 7, **dadurch gekennzeichnet, dass** eine zum Datenaustausch dienende Schnittstelle dazu ausgelegt ist, ein Verfahren zur dynamischen Adressierung von Slave-Einheiten zu nutzen.

9. Ventilator nach Anspruch 7 oder 8, **gekennzeichnet durch** ein gemeinsames Kommunikationsprotokoll mit einheitlichem Protokollsatz.

10. Ventilatorsystem, insbesondere Klimakastengerät, mit einem oder mehreren Ventilator bzw. Ventilatoren nach einem der Ansprüche 1 bis 9.

11. Ventilatorsystem nach Anspruch 10, mit mindestens einem weiteren Motor (2).

## Claims

1. Ventilator with a motor, in particular with an electronically commutated motor, such as an EC motor, wherein the motor comprises integrated motor electronics and at least one sensor unit (11) for direct or indirect pressure/volume flow control, whereby the control can be carried out internally or externally, wherein the sensor unit (11) is designed as a module which can plugged onto the motor electronics or plugged into the motor electronics or is integrated at least partially into the motor electronics and is supplied with energy via the motor electronics, i.e. internally, wherein the sensor unit (11) is designed as a module, plugged in/onto a circuit board of the motor electronics and is contacted there, and comprises a pressure sensor (17), through which, via a flow connection, in particular via at least one internal hose (12) within the housing (3) and at least one external hose outside the housing (3), a local pressure or, via two internal hoses (12) within the housing (3), extending from the modular sensor unit (11) to a passage (6) and being flowconnected via a pressure connection (4) belonging to the passage (6) with two nozzles (5) for two external pressure hoses outside the housing (3), a pressure difference of the pressure at two locations is determinable, and a corresponding analog or digital signal of the pressure or pressure difference is supplyable to a processing unit, for example, a microprocessor.

2. Ventilator according to claim 1, **characterized in that** the sensor unit (11) comprises further electronic components, such as a circuit board with electronic elements.

3. Ventilator according to one of claims 1 to 2, **characterized in that** the sensor unit (11) comprises further sensors that are connected to the remainder of the sensor unit (11), and their measurement values are readable and/or that further internal or external sensor units are provided.

4. Ventilator according to claim 3, **characterized in that** the further sensors are designed to provide measurement values with regard to the temperature, humidity, and/or air quality.

5. Ventilator according to one of claims 1 to 4, **characterized in that** the sensor unit (11) is designed to communicate directly with a motor controller unit, either analog or digital, for example, via a bus system.

6. Ventilator according to one of claims 1 to 5, **characterized in that** an external, higher-ranking control is provided, specifying a setpoint value preferably through a bus system, for example via a Modbus.

7. Ventilator according to claim 6, **characterized in that** the higher-ranking control is provided, among others, for data exchange with an integrated motor control and the sensor unit (11)

8. Ventilator according to claim 7, **characterized in that** an interface used for data exchange is designed to use a method for dynamic addressing of slave units.

9. Ventilator according to claim 7 or 8, **characterized by** a common communication protocol with a uniform protocol set.

10. Ventilator system, in particular air-conditioning unit, with one or more ventilators (2) according to any one of claims 1 to 9.

11. Ventilator system according to claim 10, with at least one further motor (2).

## Revendications

1. Ventilateur avec un moteur, plus particulièrement avec un moteur commuté électroniquement, plus exemple un moteur EC, dans lequel le moteur comprend une électronique de moteur intégrée et au moins une unité de capteur (11) pour la régulation directe ou indirecte de la pression / du débit volumique, dans lequel la régulation peut avoir lieu en interne ou en externe, dans lequel l'unité de capteur (11) est conçue comme un module enfichable sur l'électronique de moteur ou insérable dans l'électronique de moteur ou est intégrée au moins partiellement dans l'électronique du moteur et est alimentée en énergie par l'intermédiaire de l'électronique du moteur, c'est-à-dire en interne,
dans lequel l'unité de capteur (11) est conçu de façon modulaire, insérée dans/sur un circuit imprimé de l'électronique du moteur et mise en contact avec celle-ci et comprend un capteur de pression (17), grâce auquel, par l'intermédiaire d'une liaison d'écoulement, à savoir par l'intermédiaire d'au moins un tuyau interne (12) à l'intérieur du boîtier (3) et d'au moins un tuyau externe à l'extérieur du boîtier (3), une pression locale ou, par l'intermédiaire de deux tuyaux internes (12) à l'intérieur du boîtier (3), qui s'étendent de l'unité de capteur modulaire (11) vers un passage (6) et sont reliés en écoulement par l'intermédiaire d'un raccordement de pression (4) appartenant au passage (6), avec deux embouts (5) pour deux tuyaux de pression externes à l'extérieur du boîtier (3), une différence de pression de la pression à deux endroits peut être déterminée et un signal analogique ou numérique correspondant à la pression ou à la différence de pression peut être transmis à une unité de traitement, par exemple un microprocesseur.

2. Ventilateur selon la revendication 1, **caractérisé en ce que** l'unité de capteur (11) comprend d'autres composants électroniques, par exemple un circuit imprimé avec des composants électroniques.

3. Ventilateur selon l'une des revendications 1 à 2, **caractérisé en ce que** l'unité de capteur (11) comprend d'autres capteurs, qui sont raccordés au reste de l'unité de capteur (11) et dont les valeurs de mesure peuvent être lues et/ou **en ce que** d'autres unités de capteurs internes ou externes sont prévues.

4. Ventilateur selon la revendication 3, **caractérisé en ce que** les autres capteurs sont conçus pour délivrer des valeurs de mesure concernant la température, l'humidité de l'air et/ou la qualité de l'air.

5. Ventilateur selon l'une des revendications 1 à 4, **caractérisé en ce que** l'unité de capteur (11) est conçue pour communiquer directement avec une unité de contrôle de moteur de manière analogique ou numérique, par exemple à l'aide d'un système de bus.

6. Ventilateur selon l'une des revendications 1 à 5, **caractérisé en ce qu'**une régulation externe principale est prévue, qui prédéfinit une valeur de consigne, de préférence par l'intermédiaire d'un système de bus, par exemple par l'intermédiaire d'un modbus.

7. Ventilateur selon la revendication 6, **caractérisé en ce que** la régulation principale est prévue, entre autres pour l'échange de données, avec une commande de moteur intégrée et l'unité de capteur (11).

8. Ventilateur selon la revendication 7, **caractérisé en ce qu'**une interface permettant l'échange de données est conçue pour utiliser un procédé d'adressage dynamique d'unités esclaves.

9. Ventilateur selon la revendication 7 ou 8, **caractérisé par** un protocole de communication commun avec un jeu de protocoles unique.

10. Système de ventilateur, plus particulièrement un appareil de climatisation, avec un ou plusieurs ventilateurs selon l'une des revendications 1 à 9.

11. Système de ventilateur selon la revendication 10, avec au moins un autre moteur (2).
